# FASCICULE DE BREVET EUROPEEN

(11) **EP 3 299 692 B1**
(45) Date de publication et mention de la délivrance du brevet: **17.04.2019**
(21) Numéro de dépôt: 17182904.7
(22) Date de dépôt: 25.07.2017
(51) Int. Cl.: F17C 13/04

(54) **ROBINET POUR FLUIDE SOUS PRESSION**
HAHN FÜR FLÜSSIGKEIT UNTER DRUCK
VALVE FOR PRESSURISED FLUID

(30) Priorité: 26.09.2016 FR 1659018
(43) Date de publication de la demande: 28.03.2018
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: ONDO, Olivier, 78710 Rosny sur Seine (FR)
(74) Mandataire: De Cuenca, Emmanuel Jaime

(56) Documents cités:
- FR-A1- 2 878 313
- FR-A1- 2 991 750
- GB-A- 2 514 360
- US-A- 3 035 605
- US-A- 3 270 768

## Description

L'invention concerne un robinet pour fluide sous pression ainsi qu'un réservoir comprenant un tel robinet.

L'invention concerne plus particulièrement un robinet pour fluide sous pression, avec ou sans détendeur de pression intégré, comprenant un corps abritant un circuit de fluide ayant une extrémité amont destinée à être mise en relation avec une réserve de fluide sous pression et une extrémité aval destinée à être mise en relation avec un appareil utilisateur, le circuit comprenant une vanne de contrôle du débit dans le circuit, la vanne étant commandée par un levier monté pivotant sur le corps du robinet entre une position de repos dans laquelle la vanne est maintenu dans un premier état correspondant à une première valeur de débit dans le circuit et une seconde position active dans laquelle le levier déplace la vanne dans un second état correspondant à une seconde valeur de débit dans le circuit, le levier comprenant une portion de préhension s'étendant selon une direction longitudinale entre deux extrémités terminales respectivement inférieure et supérieure, la portion de préhension étant destinée à être manipulée, le levier comprenant en outre une portion de montage montée articulée sur le corps au niveau d'au moins un axe de rotation, la portion de montage étant raccordée à la portion de préhension et s'étendant transversalement par rapport à la portion de préhension.

Le document FR2828922A1 décrit un exemple de robinet à levier.

Pour des raisons mécaniques et/ou esthétiques, il peut être nécessaire d'adapter la longueur d'un tel levier.

L'augmentation de la longueur d'un tel robinet peut entraîner des problèmes d'intégration du robinet (dans un chapeau de protection par exemple). De même, les efforts générés par le couple du levier peuvent être relativement importants.

Un objectif continu est d'améliorer la compacité et/ou leur ergonomie d'utilisation de tels robinets à levier sans nuire à leur aspect esthétique.

Le document GB2514360A décrit un robinet conforme au préambule de la revendication 1.

Un but de la présente invention est de pallier tout ou partie des inconvénients de l'art antérieur relevés ci-dessus.

A cette fin, le robinet selon l'invention, par ailleurs conforme à la définition générique qu'en donne le préambule ci-dessus, est essentiellement caractérisé en ce que la portion de montage est raccordée à la portion de préhension au niveau d'une partie centrale de la portion de préhension, c'est-à-dire entre lesdites extrémités terminales inférieur et supérieure.

Par ailleurs, des modes de réalisation de l'invention peuvent comporter l'une ou plusieurs des caractéristiques suivantes :
- la portion de montage est raccordée à la portion de préhension à une distance comprise entre deux et dix centimètres de l'extrémité terminale supérieure, notamment entre quatre et neuf centimètres,
- en vue de côté, la structure du levier formée par les portions de préhension et de montage a la forme générale d'un T, la portion d'attache formant le pied du T,
- la portion de montage est articulée sur le corps au niveau d'un axe de rotation situé à une extrémité terminale de la portion d'attache et distante de la portion de préhension de trois à dix centimètres, notamment quatre à neuf centimètres,
- l'un au moins parmi : la portion de montage, la portion de préhension, est rectiligne et/ou coudé et/ou courbe,
- le corps du robinet comprend une rainure, au moins une partie de la portion de montage étant logée et mobile dans ladite rainure,
- dans au moins de des positions suivantes : la position de repos, la position active, une position intermédiaire entre les positions de repos et active, au moins une partie de la portion de préhension est logée dans ladite rainure,
- en configuration d'utilisation, la surface extérieure du robinet comprend une surface supérieure et une surface latérale, la rainure étant formée au niveau de la surface latérale et/ou au niveau de la surface supérieure,
- la rainure a des dimensions et une forme conjuguées des dimensions et forme de la ou des parties du levier qu'elle accueille,
- le robinet comporte une enveloppe extérieure rapportée sur la surface extérieure du corps du robinet, la rainure étant formée au moins en partie dans ladite enveloppe,

L'invention concerne également un réservoir comprenant un robinet conforme à l'une quelconque des caractéristiques ci-dessus ou ci-dessous.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
- la figure 1 représente une vue en perspective, schématique est partielle, illustrant un exemple de structure de levier selon l'invention,
- la figure 2 représente une vue de côté, schématique est partielle, illustrant un exemple de structure d'un robinet intégrant un tel levier,
- la figure 3 représente une vue de dessus, schématique est partielle, illustrant un exemple de structure du robinet de la figure 2.

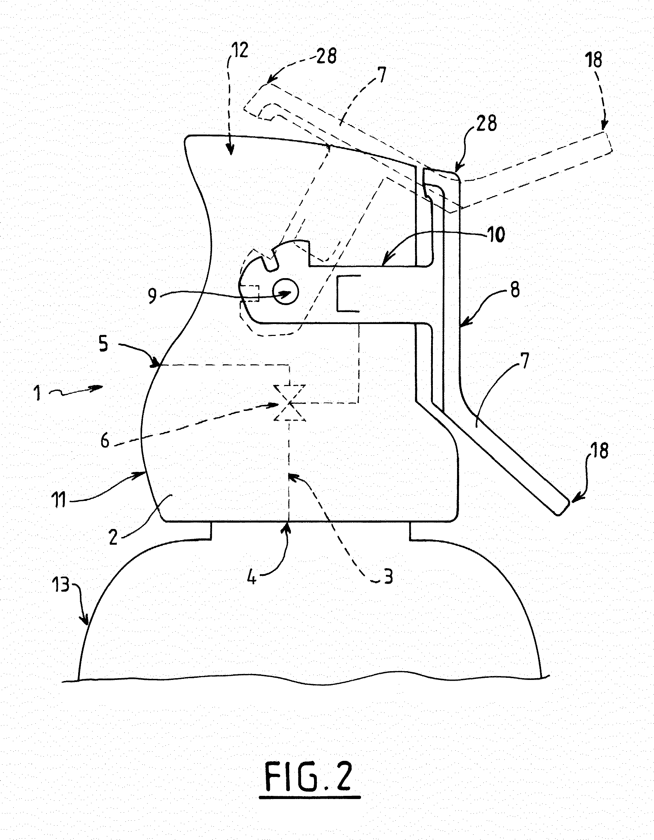

Le robinet 1 représenté à la figure 2 comprend un corps 2 abritant classiquement un circuit 3 de fluide ayant une extrémité 4 amont destinée à être mise en relation avec une réserve de fluide sous pression (une bouteille 13 ou un ensemble de bouteilles par exemple) et une extrémité 5 aval destinée à être mise en relation avec un appareil utilisateur du gaz fourni par la réserve de fluide sous pression.

Le circuit 3 comprend classiquement une vanne 6 de contrôle du débit dans le circuit 3. Cette vanne 6 peut être un clapet d'isolation pour l'ouverture ou la fermeture du circuit 3 et/ou un clapet permettant de régler un débit ou une pression ou tout autre type de clapet approprié.

La vanne 6 est commandée par un levier 7 monté pivotant sur le corps 2 du robinet 1 (au niveau par exemple d'au moins une articulation 9).

Le levier 7 est mobile entre une position de repos (en traits pleins sur la figure 2) dans laquelle la vanne 6 est maintenu dans un premier état correspondant à une première valeur de débit dans le circuit 3 (par exemple un débit nul) et une seconde position active (en pointillés sur la figure 2) dans laquelle le levier 7 déplace la vanne 6 dans un second état correspondant à une seconde valeur de débit dans le circuit 3 (par exemple circuit complètement ouvert pour un débit maximal).

L'organe 6 de contrôle de débit dans le circuit 3 représenté aux figures comprend une vanne 6 mais tout autre organe 6 de contrôle de débit pourrait être envisagé.

Par exemple, en variante ou en combinaison, le robinet 2 pourrait comprendre une pièce mobile telle qu'un pousse-clapet dont le mouvement est commandé par le levier 7. Ce pousse- clapet, par exemple mobile en translation, peut être prévu par exemple pour actionner (ouvrir notamment) un système de clapet(s) situé sur un autre robinet ou une bouteille sur lequel le robinet 1 vient se raccorder pour prélever ou transférer du fluide sous pression.

Le levier 7 comprend une portion 8 de préhension s'étendant selon une direction longitudinale entre deux extrémités terminales respectivement inférieure 18 et supérieure 28. Par les termes « portion de préhension 8 » on définit la partie du levier 7 destinée à être manipulée et/ou accessible pour un utilisateur. Par exemple, en pratique, seule la partie inférieure de cette portion 8 de préhension est manipulée manuellement.

Le levier 7 comprend en outre une portion 10 de montage montée articulée sur le corps 2 au niveau d'au moins un axe 9 de rotation.

La portion 10 de montage est raccordée (par exemple soudée ou monobloc) à la portion 8 de préhension.

Cette portion 10 de montage s'étend transversalement à partir de la portion 8 de préhension.

Par « portion de 10 de montage » on désigne la partie du levier 7 qui n'a pas vocation à être manipulée et/ou être qui n'est pas visible mais qui assure la liaison du levier 7 avec le corps 2 du robinet et le reste du mécanisme de ce dernier.

Selon une particularité avantageuse, la portion 10 de montage est reliée à la portion 8 de préhension au niveau d'une partie centrale de la portion de préhension, c'est-à-dire entre lesdites extrémités terminales 18, 28. Cela signifie que l'axe 9 de rotation est décalé par rapport à l'extrémité supérieure 28 de la portion 8 de préhension selon la direction longitudinale de cette portion de préhension.

Ainsi, en position de repos, l'axe de rotation 9 est situé verticalement en dessous de l'extrémité supérieure 28 de la portion de préhension du levier 7. C'est-à-dire que le levier 7 peut présenter une portion de préhension relativement grande et longue sans nécessiter de prévoir un bras de levier trop important (c'est-à-dire que la distance entre l'axe 9 de rotation et l'extrémité inférieure 18 de la portion 8 de préhension peut être relativement limité).

Ceci permet de prévoir un levier 7 ayant des dimensions relativement importantes (portion de préhension 8 notamment), tout en permettant de localiser l'axe 9 de rotation de façon centrale dans ou sur le corps 2 du robinet (cf. figure 2).

Ceci permet de réduire ou d'optimiser la compacité du robinet 1 (en vue notamment de son intégration dans un chapeau de protection ou tout autre environnement).

Par exemple, la structure du levier 8 formée par les portions de préhension 8 et de montage 10 a ainsi la forme générale d'un T, la portion d'attache 10 formant la base ou « le pied » du T.

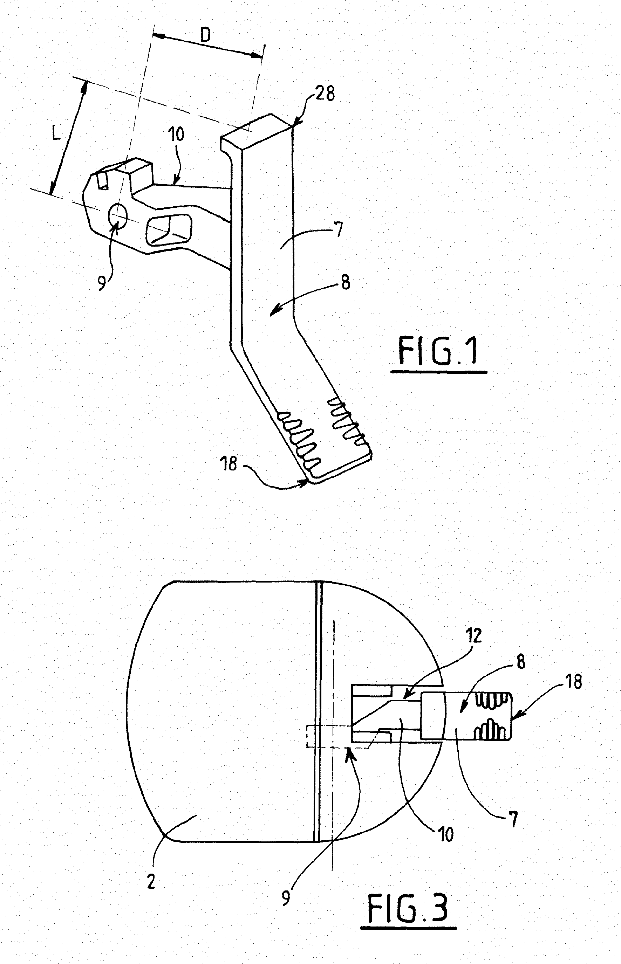

Par exemple, la portion 10 de montage est raccordée à la portion 8 de préhension à une distance L comprise entre deux et dix centimètres de l'extrémité terminale supérieure 28 (cf. figure 1).

De même, la portion 10 de montage peut être articulée sur le corps 2 au niveau d'un axe 9 de rotation situé à une extrémité terminale de la portion 10 de montage et à une distance D transversale de la portion 8 de préhension comprise entre trois et dix centimètres.

Comme illustré l'un au moins parmi : la portion 10 de montage, la portion 8 de préhension, est rectiligne et/ou coudé et/ou courbe. En particulier, lorsqu'il est fait référence notamment à la portion de préhension qui s'étend « selon une direction longitudinale », ceci ne doit être compris de façon limitative (rectiligne). Au contraire la portion de préhension 8 peut être courbe ou coudée tout en s'entendant selon une direction globalement longitudinale.

Comme illustré aux figures 2 et 3, sans que ceci soit limitatif pour autant, le corps 2 du robinet peut comprendre une rainure 12, par exemple centrale et au moins une partie de la portion 10 de montage est logée au moins en partie (et se déplace) dans cette rainure 12.

Selon cette configuration, la partie supérieure le la portion de préhension 8 du levier 7 (située au-dessus de l'axe 9 de rotation) peut former ainsi un cache occultant une partie de la rainure 12 (cf. les deux positions de la figure 2).

La partie supérieure de la portion 8 de préhension peut notamment former un écran limitant l'intrusion de saletés dans la rainure 12.

En configuration d'utilisation, la surface extérieure du robinet 1 comprend une surface supérieure et une surface latérale et la rainure 12 peut être formée au niveau de la surface latérale et/ou au niveau de la surface supérieure.

Comme illustré aux figures 2 et 3, dans au moins de des positions suivantes : la position de repos, la position active, une position intermédiaire entre les positions de repos et active, au moins une partie de la portion 8 de préhension est logée dans ladite rainure 12.

De préférence la rainure 12 a des dimensions et une forme conjuguées des dimensions et forme de la ou des parties du levier 7 qu'elle accueille. Ceci améliore la compacité du robinet sans nuire à son esthétique.

## Revendications

1. Robinet pour fluide sous pression, avec ou sans détendeur de pression intégré, comprenant un corps (2) abritant un circuit (3) de fluide ayant une extrémité (4) amont destinée à être mise en relation avec une réserve de fluide sous pression et une extrémité (5) aval destinée à être mise en relation avec un appareil utilisateur, le circuit (3) comprenant une vanne (6) de contrôle du débit dans le circuit (3), la vanne (6) étant commandée par un levier (7) monté pivotant sur le corps (2) du robinet (1) entre une position de repos dans laquelle la vanne (6) est maintenue dans un premier état correspondant à une première valeur de débit dans le circuit (3) et une seconde position active dans laquelle la vanne (6) est maintenue dans un second état correspondant à une seconde valeur de débit dans le circuit (3), le levier (7) comprenant une portion (8) de préhension s'étendant selon une direction longitudinale entre deux extrémités terminales respectivement inférieure (18) et supérieure (28), la portion (8) de préhension étant destinée à être manipulée, le levier (7) comprenant en outre une portion (10) de montage montée articulée sur le corps (2) au niveau d'au moins un axe (9) de rotation, la portion (10) de montage étant raccordée à la portion (8) de préhension et s'étendant transversalement par rapport à la portion (8) de préhension, **caractérisé en ce que** la portion (10) de montage est raccordée à la portion (8) de préhension au niveau d'une partie centrale de la portion de préhension, c'est-à-dire entre lesdites extrémités terminales inférieur (18) et supérieure (28).

2. Robinet selon la revendication 1 **caractérisé en ce que** la portion (10) de montage est raccordée à la portion (8) de préhension à une distance comprise entre deux et dix centimètres de l'extrémité terminale supérieure (28), notamment entre quatre et neuf centimètres.

3. Robinet selon la revendication 1 ou 2, **caractérisé en ce que**, en vue de côté, la structure du levier (8) formée par les portions de préhension (8) et de montage (10) a la forme générale d'un T, la portion de montage (10) formant le pied du T.

4. Robinet selon l'une quelconque des revendications 1 à 3, **caractérisé en ce que** la portion (10) de montage est articulée sur le corps (2) au niveau de l'axe (9) de rotation situé à une extrémité terminale de la portion d'attache et distante de la portion (8) de préhension de trois à dix centimètres, notamment quatre à neuf centimètres.

5. Robinet selon l'une quelconque des revendications 1 à 4, **caractérisé en ce que** l'un au moins parmi : la portion (10) de montage, la portion (8) de préhension, est rectiligne et/ou coudé et/ou courbe.

6. Robinet selon l'une quelconque des revendications 1 à 5, **caractérisé en ce que** le corps (2) du robinet comprend une rainure (12) et **en ce que** qu'au moins une partie de la portion (10) de montage est logée et mobile dans ladite rainure (12).

7. Robinet selon la revendication 6, **caractérisé en ce que**, dans au moins de des positions suivantes : la position de repos, la position active, une position intermédiaire entre les positions de repos et active, au moins une partie de la portion (8) de préhension est logée dans ladite rainure (12).

8. Robinet selon la revendication 6 ou 7, **caractérisé en ce que**, en configuration d'utilisation, la surface extérieure du robinet (1) comprend une surface supérieure et une surface latérale et **en ce que** la rainure (12) est formée au niveau de la surface latérale et/ou au niveau de la surface supérieure.

9. Robinet selon l'une quelconque des revendications 6 à 8, **caractérisé en ce que** la rainure (12) a des dimensions et une forme conjuguées des dimensions et forme de la ou des parties du levier (7) qu'elle accueille.

10. Robinet selon l'une quelconque des revendications 6 à 9, **caractérisé en ce qu'**il comporte une enveloppe (11) extérieure rapportée sur la surface extérieure du corps (2) du robinet (1) et **en ce que** la rainure (12) est formée au moins en partie dans ladite enveloppe (11).

11. Réservoir de fluide sous pression comprenant un robinet, **caractérisé en ce que** le robinet est conforme à l'une quelconque des revendications précédentes.

## Patentansprüche

1. Schließhahn für Druckfluid mit oder ohne integriertem Druckminderer, umfassend einen Körper (2), der einen Fluidkreislauf (3) aufnimmt, der ein stromaufwärtiges Ende (4), das dazu bestimmt ist, mit einem Behälter für Druckfluid in Verbindung gebracht zu werden, und ein stromabwärtiges Ende (5) aufweist, das dazu bestimmt ist, mit einer Benutzereinrichtung in Verbindung gebracht zu werden, wobei der Kreislauf (3) ein Ventil (6) zur Steuerung des Durchsatzes im Kreislauf (3) umfasst, wobei das Ventil (6) durch einen Hebel (7) gesteuert wird, der schwenkbar auf den Körper (2) des Schließhahns (1) zwischen einer Ruheposition, in der das Ventil (6) in einem ersten Zustand gehalten wird, der einem ersten Durchsatzwert im Kreislauf (3) entspricht, und einer zweiten aktiven Position montiert ist, in der das Ventil (6) in einem zweiten Zustand gehalten wird, der einem zweiten Durchsatzwert im Kreislauf (3) entspricht, wobei der Hebel (7) einen Greifabschnitt (8) umfasst, der sich gemäß einer Längsrichtung zwischen zwei, jeweils unteren (18) und oberen (28), terminalen Enden erstreckt, wobei der Greifabschnitt (8) dazu bestimmt ist, gehandhabt zu werden, wobei der Hebel (7) weiter einen Montageabschnitt (10) umfasst, der gelenkig auf dem Körper (2) auf der Ebene mindestens einer Drehachse (9) montiert ist, wobei der Montageabschnitt (10) mit dem Greifabschnitt (8) verbunden ist und sich quer in Bezug auf den Greifabschnitt (8) erstreckt, **dadurch gekennzeichnet, dass** der Montageabschnitt (10) mit dem Greifabschnitt (8) auf der Ebene eines zentralen Teils des Greifabschnitts verbunden ist, d. h. zwischen dem unteren (18) und oberen (28) terminalen Ende.

2. Schließhahn nach Anspruch 1, **dadurch gekennzeichnet, dass** der Montageabschnitt (10) mit dem Greifabschnitt (8) in einem Abstand verbunden ist, der im Bereich zwischen zwei und zehn Zentimetern vom oberen terminalen Ende (28) liegt, insbesondere zwischen vier und neun Zentimetern.

3. Schließhahn nach Anspruch 1 oder 2, **dadurch gekennzeichnet, dass**, von der Seite gesehen, die Struktur des Hebels (8), die von den Greif- (8) und Montageabschnitten (10) gebildet ist, die allgemeine Form eines T aufweist, wobei der Montageabschnitt (10) den Fuß des T bildet.

4. Schließhahn nach einem der Ansprüche 1 bis 3, **dadurch gekennzeichnet, dass** der Montageabschnitt (10) auf dem Körper (2) auf der Ebene der Drehachse (9) angelenkt ist, die sich auf einem terminalen Ende des Befestigungsabschnitts befindet und vom Greifabschnitt (8) um drei bis zehn Zentimeter, insbesondere vier bis neun Zentimeter, entfernt ist.

5. Schließhahn nach einem der Ansprüche 1 bis 4, **dadurch gekennzeichnet, dass** mindestens eines aus: dem Montageabschnitt (10), dem Greifabschnitt (8), geradlinig und/oder gebogen und/oder gekrümmt ist.

6. Schließhahn nach einem der Ansprüche 1 bis 5, **dadurch gekennzeichnet, dass** der Körper (2) des Schließhahns eine Nut (12) umfasst und dadurch, dass mindestens ein Teil des Montageabschnitts (10) in der Nut (12) aufgenommen und beweglich ist.

7. Schließhahn nach Anspruch 6, **dadurch gekennzeichnet, dass** in mindestens den folgenden Positionen: der Ruheposition, der aktiven Position, einer Zwischenposition zwischen der Ruhe- und der aktiven Position, mindestens ein Teil des Greifabschnitts (8) in der Nut (12) aufgenommen ist.

8. Schließhahn nach Anspruch 6 oder 7, **dadurch gekennzeichnet, dass**, in der Verwendungskonfiguration, die äußere Fläche des Schließhahns (1) eine obere Fläche und eine seitliche Fläche umfasst, und dadurch, dass die Nut (12) auf der Ebene der seitlichen Fläche und/oder auf der Ebene der oberen Fläche gebildet ist.

9. Schließhahn nach einem der Ansprüche 6 bis 8, **dadurch gekennzeichnet, dass** die Nut (12) Abmessungen und eine Form aufweist, die aus den Abmessungen und der Form des oder der Teile des Hebels (7), den/die sie aufnimmt, zusammengesetzt sind.

10. Schließhahn nach einem der Ansprüche 6 bis 9, **dadurch gekennzeichnet, dass** er eine äußere Umhüllung (11) umfasst, die auf der äußeren Fläche des Körpers (2) des Schließhahns (1) aufgesetzt ist, und dadurch, dass die Nut (12) mindestens teilweise in der Umhüllung (11) gebildet ist.

11. Behälter für Druckfluid, umfassend einen Schließhahn, **dadurch gekennzeichnet, dass** der Schließhahn einem der vorstehenden Ansprüche konform ist.

## Claims

1. Tap for pressurised fluid, with or without integrated pressure regulator, comprising a body (2) housing a fluid circuit (3) having an upstream end (4) intended to be put through a pressurised fluid reserve and a downstream end (5) intended to be put through a user device, the circuit (3) comprising a valve (6) for controlling the flow in the circuit (3), the valve (6) being controlled by a lever (7) mounted pivoting on the body (2) of the tap (1) between an idle position wherein the valve (6) is maintained in a first state corresponding to a first flow value in the circuit (3) and a second active position wherein the valve (6) is maintained in a second state corresponding to a second flow value in the circuit (3), the lever (7) comprising a gripping portion (8) extending along a longitudinal direction between two respectively lower (18) and upper (28) terminal ends, the gripping portion (8) being intended to be handled, the lever (7) further comprising a mounting portion (10) mounted hinged on the body (2) at the level of at least one rotation axis (9), the mounting portion (10) being connected to the gripping portion (8) and extending transversally with respect to the gripping portion (8), **characterised in that** the mounting portion (10) is connected to the gripping portion (8) at the level of a central part of the gripping portion, i.e. between said lower (18) and upper (28) terminal ends.

2. Tap according to claim 1, **characterised in that** the mounting portion (10) is connected to the gripping portion (8) at a distance of between two and ten centimetres from the upper terminal end (28), in particular between four and nine centimetres.

3. Tap according to claim 1 or 2, **characterised in that**, from a side view, the structure of the lever (8) formed by the gripping (8) and mounting (10) portions has the general shape of a T, the mounting portion (10) forming the base of the T.

4. Tap according to any one of claims 1 to 3, **characterised in that** the mounting portion (10) is hinged on the body (2) at the level of the rotation axis (9) situated at a terminal end of the fastening portion and distant from the gripping portion (8) by three to ten centimetres, in particular four to nine centimetres.

5. Tap according to any one of claims 1 to 4, **characterised in that** the at least one from among: the mounting portion (10), the gripping portion (8), is rectilinear and/or bent and/or curved.

6. Tap according to any one of claims 1 to 5, **characterised in that** the body (2) of the tap comprises a groove (12) and **in that** at least one part of the mounting portion (10) is housed and mobile in said groove (12).

7. Tap according to claim 6, **characterised in that**, in at least the following positions: the idle position, the active position, an intermediate position between the idle and active positions, at least one part of the gripping portion (8) is housed in said groove (12).

8. Tap according to claim 6 or 7, **characterised in that**, in configuration of use, the outer surface of the tap (1) comprises an upper surface and a side surface and **in that** the groove (12) is formed at the level of the side surface and/or at the level of the upper surface.

9. Tap according to any one of claims 6 to 8, **characterised in that** the groove (12) has combined dimensions and a shape of the dimensions and shape of the part(s) of the lever (7) that it houses.

10. Tap according to any one of claims 6 to 9, **characterised in that** it comprises an outer casing (11) returned on the outer surface of the body (2) of the tap (1) and **in that** the groove (12) is formed at least partially in said casing (11).

11. Pressurised fluid tank comprising a tap, **characterised in that** the tap conforms with any one of the preceding claims.
